# FASCICULE DE BREVET EUROPEEN

(11) **EP 2 170 915 B1**
(45) Date de publication et mention de la délivrance du brevet: **14.01.2015**
(21) Numéro de dépôt: 08826176.3
(22) Date de dépôt: 11.06.2008
(51) Int. Cl.: C07F 15/02, G11B 7/249, G11B 7/246, C07D 249/04, G11B 7/245, C09B 45/00, C09B 67/08, C09B 67/22, C09D 5/26, B82B 3/00

(54) **MATERIAU A TRANSITION DE SPIN.**
SPINÜBERGANGSMATERIAL
SPIN TRANSITION MATERIAL

(30) Priorité: 12.06.2007 FR 0704174
(43) Date de publication de la demande: 07.04.2010
(73) Titulaire: Centre National de la Recherche Scientifique, 75016 Paris (FR)
(72) Inventeur: LETARD, Jean-François, F-33610 Canejan (FR); DARO, Nathalie, F-33600 Pessac (FR); AUFFRET, Sandie, F-91440 Bures-sur-Yvette (FR)
(74) Mandataire: Goulard, Sophie
(86) Numéro de dépôt international: PCT/FR2008/000792
(87) Numéro de publication internationale: WO 2009/007534

(56) Documents cités:
- WO-A-2007/065996
- DE-A1- 10 307 514
- KONINGSBRUGGEN VAN P J ET AL: "NON-CLASSICAL FE11 SPIN-CROSSOVER BEHAVIOUR IN POLYMERIC IRON(II) COMPOUNDS OF FORMULA ÚFE(NH2TRZ)3X2.CHIH2O (NH2TRZ=4-AMINO-1,2,4-TRIA ZOLE; X=DERIVATIVES OF NAPHTHALENE SULFONATE)" JOURNAL OF MATERIALS CHEMISTRY, THE ROYAL SOCIETY OF CHEMISTRY, CAMBRIDGE, GB, vol. 7, no. 10, 1 octobre 1997 (1997-10-01), pages 2069-2075, XP000728976 ISSN: 0959-9428
- KUME, SHOKO ET AL: "Photoresponsive molecular wires of FeII triazole complexes in organic media and light-induced morphological transformations" CHEMICAL COMMUNICATIONS, no. 23, 2006, pages 2442-2444, XP002470183 CAMBRIDGE, UNITED KINGDOM ISSN: 1359-7345

## Description

La présente invention concerne un matériau comprenant essentiellement un composé à transition de spin, des procédés pour la préparation dudit matériau, ainsi que diverses applications du matériau. Il est connu d'utiliser des composés qui présentent une transition de spin pour diverses applications, notamment pour le stockage d'informations. De tels composés peuvent être notamment des complexes de coordination contenant un ou plusieurs centres métalliques ayant une configuration 3d⁴, 3d⁶ ou 3d⁷, un ou plusieurs ligands azotés, et un ou plusieurs anions, tels que décrits par exemple dans EP-0 543 465, EP-0 666 561 , EP-0 745 986 et EP-0 842 988.

EP-0 543 465 décrit un procédé de préparation de composés à transition de spin et l'utilisation pour le stockage d'information. Le procédé consiste à mettre en présence d'une part le ligand et d'autre part un sel de fer dans une solution acide, à laisser réagir pour obtenir un précipité, et à récupérer le précipité sous forme de poudre. Pour l'utilisation pour le stockage de données, le complexe obtenu est préalablement réduit en poudre, pour être déposé sur un support par diverses méthodes. Les composés cités répondent à l'une des formules suivantes : FeL₃(NO₃)₂ dans laquelle L est un ligand du type 1,2,4-triazole ou 4-amino-1,2,4-triazole associé à l'anion NO₃⁻ ; Fe(ATP)₂,5Cl₂, dans laquelle le ligand ATP est le 4-amino-1,2,4-triazole associé à Fe(II) et à Cl⁻ ; Fe(TP)₂Cl₂ dans laquelle le ligand TP est le 1,2,4-triazole, associé à Cl⁻ ; [Fe(2-aminométhyl-pyridine)₃]Cl₂EtOH, EtOH étant l'éthanol ; [Fe(1,10-phénanthroline)₂](NCS)₂ ; [Fe(1-propyltétrazole)₆](BF₄)₂ ; des complexes d'un métal M associé à un mélange de plusieurs ligands (choisis parmi R-Trz, les amines NL₂ et les triazolates Trz-, M étant Fe(II), Fe(III) ou Co(II), R-Trz étant un triazole portant un substituant R, R et L étant un alkyle ou H), et à un anion choisi parmi BF₄⁻, ClO₄⁻, CO₃²⁻, Br⁻, Cl⁻, le complexe contenant en outre une quantité définie d'eau.

A l'exception du [Fe(1,10-phénanthroline)₂(NCS)₂], l'ensemble de ces complexes est de couleur rose dans l'état bas spin (BS), et blanc dans l'état haut spin (HS). La transition est provoquée par chauffage ou refroidissement et a lieu entre -20°C et 100°C. Ces composés présentent un phénomène d'hystérésis pouvant aller de quelques degrés à quelques dizaines de degrés.

EP-0 666 561 décrit des composés à transition de spin, qui répondent à la formule Fe(II)(H-Trz)₃(X)₂ dans laquelle Trz est le 1,2,4-triazole et (X)₂ représente l'anion (BF₄⁻)₂, (ClO₄⁻)₂, (Br⁻)₂, (Cl⁻)₂ ou (CO₃²⁻)₂. Ces composés présentent deux phases cristallines ayant chacune des transitions de spin associées à un changement de couleur (blanc/rose) et dont les températures T_{1/2↓} et T_{1/2↑} sont, respectivement, inférieures et supérieures à la température ambiante. Le procédé de préparation est analogue à celui décrit dans EP-0 543 465 ci-dessus.

EP-0 745 986 décrit des composés répondant à une formule analogue à celle des composés du type "complexe d'un métal M associé à un mélange de plusieurs ligands" décrits dans EP-0 543 465, M étant ici un ion métallique en configuration d⁵, d⁶ ou d⁷, le ligand est un dialkylaminotriazole, l'anion comporte un groupe sulfitoaryle, sulfitoalkyle, sulfito halogénure d'aryle ou d'alkyle. Ces composés particuliers ont une amplitude d'hystérésis supérieure à 70°C, et une région de bistabilité centrée exactement autour de la température ambiante. Lesdits composés sont roses à l'état BS et blancs à l'état HS. Le procédé de préparation des composés décrit de manière très brève est analogue à celui décrit dans EP-0 543 465 ci-dessus.

EP-0 842 988 décrit des composés chimiques à transition de spin et leur utilisation dans des dispositifs d'affichage de dépassement de seuil de température. Les composés sont formés par un réseau constitué par des molécules formées chacune par un complexe métal-ligand et par un anion, et ils comprennent au moins une molécule d'eau liée au ligand par liaison hydrogène. Le métal est choisi parmi ceux qui ont une configuration d⁴, d⁵, d⁶ ou d⁷. Le ligand est le 1,2,4-triazole portant un substituant R comprenant un groupe OH. Les anions sont des dérivés du tosylate et du nitrate. Les composés répondant à cette définition ont une température T_{1/2↑} comprise entre 80 et 95°C et T_{1/2↓} de -170°C. Ils peuvent être utilisés notamment dans des dispositifs destinés à détecter une température de stockage accidentellement élevée (de l'ordre de 80°C) dans des bâtiments de stockage ou des véhicules de transport. Les composés sont préparés en mélangeant un précurseur du centre métallique et un précurseur du ligand, à température ambiante, et en éliminant le solvant par filtration après l'obtention d'un précipité. Le composé est obtenu sous forme pulvérulente.

WO-06/002651 décrit un matériau constitué par des nanoparticules de complexes de Fer, d'un ligand triazole et d'au moins un anion. Ce matériau, du fait de son caractère nanométrique, est particulièrement utile notamment comme pigment thermochrome, ou pour le stockage de données.

Koningsbruggen Van P, et al., [Journal of Material Chemistry, The Royal Society of Chemistry, Cambridge, GB, 1997, vol. 7, n° 10, 2069-2075] décrivent des composés qui répondent à la formule [Fe(NH₂trz)₃]X₂.xH₂ dans laquelle soit les deux groupes X sont des anions non colorants tels que NO₃⁻, ClO₄⁻, Br⁻, et autres, soit les deux groupes X sont des anions qui ont des propriétés de colorant, notamment des anions naphtalène portant un groupe SO₃⁻. La couleur de ces composés passe du rose-pourpre au blanc lors d'un chauffage à environ 370K.

DE 103 07 514 décrit une encre d'impression comprenant un composé à transition de spin répondant à la formule [Fe₁₋ₘMₘ (R-Trz)₃]X₂ dans laquelle M est un métal de transition (Mn ou Co) ; 0<m<1 ; R est H ou NH₂ ; X est choisi parmi NO₃⁻, BF₄⁻, PF₆⁻, Cl⁻, I⁻, Br⁻, MeSO₃⁻, EtSO₃⁻, tosylate, ou SO₄²⁻. La couleur de ce composé varie du rose/rouge à l'état bas spin au blanc à l'état haut spin.

Toutefois, tous ces matériaux de l'art antérieur précité ont une gamme de variations de couleur très limitée puisque, selon leur état de spin, ils sont soit roses ou pourpres, soit blancs.

On connaît quelques composés pour lesquels une élévation de température provoque un changement de couleur différent de "rose-blanc". Par exemple Arslan, et al, [Dyes and Pigments, Elsevier Applied Science Publishers Barking, GB, vol. 75, n° 3, 521-525] décrivent un complexe [Zn(Hsal)₂(H₂O)(abpy)].H₂O qui passe du brun au pourpre lors d'un chauffage. "abpy" représente l'azobispyridine. Dans ces composés, le changement de couleur n'est pas due à une transition de spin, mais à une transition de phase, qui est un phénomène relativement lent, alors que la transition de spin est un phénomène rapide et quasi-infatigable en phase solide.

Kume Shoko, et al., [Chemical Communications, n° 23, 2006, 2442-2444] décrivent un complexe Fe^{II} triazole [Fe(1)₃(BF₄)₂ répondant à la formule 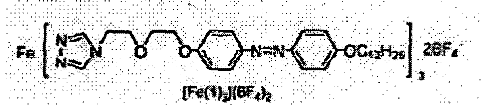 qui passe du jaune à l'orange. Ce composé permet certes un changement de couleur différent de "rose-blanc". Cependant, le changement de couleur provient non pas d'une transition de spin, mais d'une photo-isomérisation du ligand à une température donnée qui modifie l'absorption du composé. Le changement de couleur se produit sans hystérésis et n'est pas modulable.

Le but de la présente invention est de fournir des matériaux qui changent rapidement de couleur sous l'effet d'une variation de température, avec ou sans hystérésis, le changement de couleur étant autre que le rose ou le blanc, et pouvant être modulé. Cette propriété est obtenue par l'utilisation d'un complexe de fer dans lequel le ligand est associé à au moins un anion qui a des propriétés de colorant et au moins un anion qui n'a pas de propriétés de colorant.

La présente invention a par conséquent pour objet un nouveau matériau, des procédés pour l'obtention dudit matériau, ainsi que des applications dudit matériau.Le matériau selon la présente invention est constitué par au moins un composé répondant à la formule

Fe₁₋ₘMₘ(R-Trz)₃X_{b}Y_{c} (I)

dans laquelle :
- M est un métal ayant une configuration 3d⁴, 3d⁵, 3d⁶ ou 3d⁷, autre que Fe ;
- 0≤m<1, de préférence m ≤ 0,8 ;
- lorsque m>0, M est choisi parmi Zinc(II), Manganèse(II), Nickel(II), et Cobalt(II) ;
- R-Trz représente un ligand 1,2,4-triazole portant un substituant R sur l'azote en position 4 ;
- R est un groupe alkyle ayant de 1 à 4 atomes de carbone ou un groupe R¹R²N- dans lequel R¹ et R² représentent chacun indépendamment de l'autre H ou un radical alkyle ayant de 1 à 4 atomes de carbone ;
- X représente au moins un anion monovalent ou divalent non colorant ;
- Y représente au moins un anion qui a un groupe colorant ayant au moins deux cycles aromatiques et au moins un groupe SO₃⁻ ;
- b>0, c>0, b et c étant choisis de telle sorte que l'électro-neutralité du composé (I) soit respectée ; b et c étant tels que 10⁻⁵ ≤ c/b ≤ 0,1 (en mole).

Un composé qui répond à la définition ci-dessus est capable de changer d'état de spin de manière réversible lors d'un réchauffement et lors d'un refroidissement, avec un changement de couleur associé à chaque changement de spin.

Le matériau selon l'invention peut être constitué par :
- un seul composé (I) dans lequel Y représente un anion colorant ou plusieurs anions colorants différents, par exemple deux anions colorants Y¹ et Y² ;
- plusieurs composés différents qui répondent chacun à la formule (I) ; ou
- un composé répondant à la formule I et par un composé Fe₁₋ₘMₘ(R-Trz)₃X_{b}, c'est-à-dire un composé sans anion colorant.

X peut représenter un ou plusieurs anions non colorants, de préférence un ou deux anions X¹ et X². Un anion X monovalent peut être choisi parmi BF₄⁻, PF₆⁻ ClO₄⁻, Br⁻, Cl⁻, NO₃⁻, CF₃SO₃⁻ et CH₃SO₃⁻. Un anion X divalent est choisi de préférence parmi SO₄²⁻ et CO₃²⁻. Comme exemples d'association d'anions, on peut citer le couple BF₄⁻ et NO₃⁻, le couple Br⁻ et NO₃⁻, le couple Cl⁻ et NO₃⁻.

Le choix des ligands R-Trz et des anions X permet de contrôler la transition de spin (notamment le caractère abrupt, la présence d'hystérésis et la position de la transition).

Les anions colorants qui ont au moins deux cycles aromatiques et au moins un groupe SO₃⁻ sont fournis notamment par les composés dits "colorants acides" ou "colorants directs" ou "colorants brillants" ou "colorants à mordant".

L'anion de ces colorants peut comporter :
- un groupement azoïque, comme par exemple le C. I. Acid Orange 5 qui est le sel monosodique de l'acide 4-[[4-(phénylamino)-phényl]azo]benzènesulfonique, ou l'Acid Yellow 23 qui est la tartrazine, répondant à la formule : 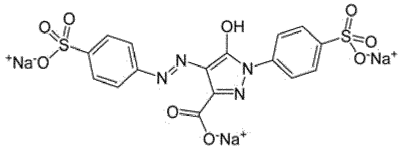 ou le Méthylorange ou Acid Orange 52 (hélianthine) répondant à la formule : 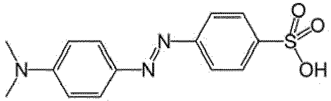 ou divers Direct Scarlet ; ou le C. I. Direct Blue 1, répondant à la formule : 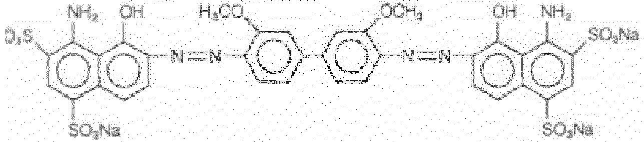 ou le C.I. Acid Red 27 répondant à la formule 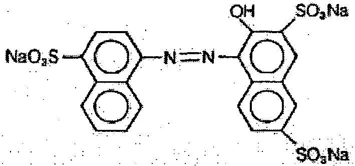
- un groupement dérivé d'une anthraquinone, par exemple le CI Reactive Blue 4 répondant à la formule : 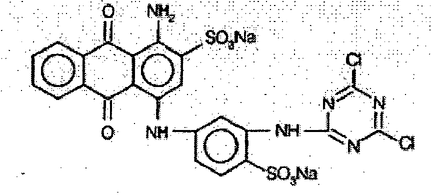
- un groupement dérivé d'une quinoline (C. I. Acid Yellow 3 ; D&C Yellow n° 30).

Parmi les colorants dits colorants acides, on peut citer, à titre d'exemple, les produits suivants : Acid Black ATT-M, Acid Black 10B (Acid Black 1), Acid Black BG (Acid Black 31),Acid Black BRN, Acid Blue-Black BR (Acid Black 24), Acid Bright Yellow G (Acid Yellow 11), Acid Bright Yellow 2G (Acid Yellow 17), Acid Brown 2R (Acid Brown 14), Acid Brown RL(Acid Brown 2), Acid Corith N-5BL (Acid red 299), Acid Chrome Grey BS (Mordant Black 13), Acid Dark Blue 5R (Acid Blue 113), Acid Dark Blue GR (Acid Blue 120), Acid Green GS (Acid Green 25), Acid Light Red 2G (Acid Red 1), Acid Milling Yellow G (Acid Yellow 117), Acid Navy Blue (Acid Blue 92), Acid Orange GS (Acid Orange 33), Acid Orange II (Acid Orange 7), Acid Red A (Acid red 88), Acid Red B (Acid Red 14), Acid Red G (Acid Red 35 or 1), Acid Red 6B (Acid Violet 35), Acid Scarlet GR (Acid Red 73), Acid Scarlet Moo (Acid Red 73), Acid Scarlet 3R (Acid Red 18), Acid Blue 1 (Patent Blue VF ou Sulfan Blue), Acid Dark, Acid Fuschin, Acid Green, Acid Orange 52 (méthyl orange ou hélianthine), Acid Violet, Acid Yellow 23 (tartrazine).

Parmi les colorants dits colorants directs, on peut citer, à titre d'exemple, les produits suivants : Direct Black TBRN, Direct Black 38, Direct Bordeaux (Direct Red 23), Direct Chrysophenine G (Direct Yellow 12), Direct Copper Blue 2R or 2B (Direct Blue 86), Direct Dark Brown M (Direct Brown 2), Direct Fast Black G (Direct Black 19), Direct Fast Black GF (Direct Black 22), Direct Fast Blue 5B (Direct Blue 86), Direct Fast Green BLL (Direct Green 26), Direct Green B (Direct Green 26), Direct Grey D (Direct Black 17), Direct Pink 12B (Direct Red 31), Direct Scarlet 4BS (Direct Red 23), Direct Sky Blue 5B (Direct Blue 15), Direct Turquoise Blue (Direct Blue 86), Direct Violet, Trypan Blue (Direct Blue 14).

Les proportions d'anions X et Y sont telles que la neutralité électronique du composé soit respectée.

La couleur de chaque état de spin du matériau selon l'invention peut être ajustée en choisissant de manière appropriée le ou les anions X et Y, et en contrôlant leur proportions respectives dans le matériau.

Il est nécessaire que la proportion d'anion colorant Y soit supérieure à un certain seuil afin d'éviter l'obtention d'un composé présentant une couleur rose à l'état bas spin et une couleur blanche à l'état haut spin. Il est également nécessaire que la proportion d'anion colorant soit inférieure à un certain seuil au-delà duquel les couleurs correspondant à l'état bas spin et à l'état haut spin se distinguent difficilement. Les limites dépendent notamment de degré de caractère colorant de l'anion Y. Ainsi, la limite inférieure et la limite supérieure de concentration d'un anion Y à fort pouvoir colorant sont inférieures à celles d'un anion à faible pouvoir colorant.

Par conséquent, un matériau selon l'invention contient des anions en proportion telle que le rapport molaire c/b, (c'est-à-dire "nombre de moles de Y"/"nombre de mole de X") soit inférieur ou égal à 0,1, et supérieur ou égal à 10⁻⁵.

L'homme du métier, qui connaît les couleurs associées aux divers colorants dont sont issus les anions Y, saura déterminer par des essais de routine les limites inférieures et supérieures entre lesquelles la proportion en anion colorant Y doit être maintenue, afin d'obtenir les contrastes nécessaires entre les couleurs du matériau dans son état bas spin et dans son état haut spin, en fonction de l'application envisagée.

Dans un mode de réalisation particulier, m = 0 et le matériau selon l'invention répond à la formule Fe(R-Trz)₃(X)_{b}(Y)_{c}.

Dans un autre mode de réalisation, m ≠ 0. M joue alors le rôle de dopant du phénomène de transition de spin du composé Fe₁₋ₘMₘ(R-Trz)₃(X)_{b}(Y)_{c}. Une augmentation de m diminue le caractère abrupt de la transition et l'intensité de la couleur correspondant à l'état de bas spin. La présence d'un élément M choisi parmi les ions Zinc(II), Manganèse(II), Nickel(II), et Cobalt(II), en remplacement partiel de Fe permet de diminuer le caractère abrupt de la transition de spin, en fonction de l'utilisation du matériau.

Le matériau selon l'invention peut être sous forme de poudre. Les particules formant la poudre peuvent avoir une dimension nanométrique, ou macroscopique. Pour particules nanométriques, on entend des particules ayant un diamètre moyen inférieur à 500 nm. Par particules macroscopiques, on entend des particules ayant un diamètre moyen supérieur à 500 nm et inférieur à 500 µm, plus particulièrement entre 600 nm et 100 µm.

Lorsque le matériau se présente sous la forme de particules nanométriques, lesdites particules nanométriques peuvent être enrobées par un film de silice. La présence de silice à la surface des particules permet de modifier leur tension superficielle et de greffer des groupes fonctionnels, utiles selon les applications du matériau à transition de spin.

Le matériau proposé est obtenu par mise en contact d'une solution contenant au moins un sel de Fe(II) d'un anion X, éventuellement un sel du métal M et d'un anion X identique ou différent de l'anion X du sel de fer, et un précurseur du ou des anion(s) colorant(s), et d'une solution de ligand R-Trz, les divers réactifs étant introduits dans le milieu réactionnel en quantités stoechiométriques correspondant à la formule Fe₁₋ₘMₘ(R-Trz)₃X_{b}Y_{c} du matériau tel que défini dans la présente invention (c'est-à-dire selon les valeurs choisies respectivement pour m, b et c), puis à faire précipiter le produit obtenu par refroidissement.

La mise en contact peut être effectuée avantageusement à la température ambiante.

Le matériau obtenu peut être utilisé soit sous forme de suspension dans le milieu aqueux dans lequel il est obtenu, soit sous forme de poudre sèche.

Un matériau selon la présente invention peut être obtenu sous forme de nanoparticules, par une synthèse en micelle inverse ou par une synthèse en microémulsion.

Le procédé par synthèse en micelle inverse comprend les étapes suivantes, lorsque m=0, c'est-à-dire en l'absence de métal M :
a) préparation d'une émulsion du type eau dans huile par addition sous agitation énergique d'une composition de type huile à propriétés tensioactives à une solution aqueuse contenant au moins un sel de fer de l'anion X, de l'acide ascorbique et un précurseur de l'anion Y ;
b) préparation d'une émulsion du type eau dans huile par addition d'une composition de type huile à propriétés tensioactives à une solution aqueuse du ligand R-Trz sous agitation énergique ;
c) mélange des deux émulsions sous agitation énergique ;
d) précipitation des nanoparticules par addition d'un solvant qui ne modifie pas la structure des nanoparticules, et qui dénature l'émulsion, par exemple l'éther éthylique.

Une agitation de 1 à 10 min est généralement suffisante pour mélanger convenablement les deux émulsions.

Le solvant utilisé pour dénaturer l'émulsion et faire précipiter le matériau à transition de spin est choisi en fonction de l'agent tensio-actif utilisé. Ce choix est à la portée de l'homme de métier.Le précipité obtenu peut être extrait du milieu aqueux par plusieurs cycles "lavage / centrifugation", puis évaporation du solvant de lavage. Le solvant de lavage est avantageusement le solvant qui a servi à précipiter les nanoparticules.

Pour la préparation d'un matériau comprenant deux types d'anions Y, à savoir Y¹ et Y², la solution aqueuse de l'étape a) comprend à la fois un précurseur de l'anion Y¹ et un précurseur de l'anion Y².

Pour la préparation d'un matériau comprenant deux types d'anions X, à savoir X¹ et X², la solution aqueuse de l'étape a) comprend à la fois un sel de fer de X¹, et un sel de fer de X².

La composition du type huile à propriétés tensioactives peut être soit une composition obtenue par addition d'un tensioactif à une huile, soit un produit unique ayant à la fois des propriétés de tensioactif et d'huile (tel que les produits commercialisés sous les dénominations Lauropal ®, Tergitol ® ou Ifralan ®).

La dimension des particules formées peut être contrôlée notamment par le choix de la température de réaction et/ou de la durée de mise en contact des deux microémulsions préparées respectivement au cours des étapes a) et b). Toutes choses étant égales par ailleurs, une augmentation de la durée et/ou de la température favorise une augmentation de la dimension des particules finales.Le procédé par une synthèse en microémulsion comprend les étapes suivantes, lorsque m=0, c'est-à-dire en l'absence de métal M :
a. préparation d'une microémulsion du type eau dans huile par addition d'une solution aqueuse contenant au moins un sel de fer de l'anion X et d'un précurseur de l'anion colorant Y, à une solution d'un tensioactif dans une huile (n-heptane par exemple), et dispersion jusqu'à l'obtention d'une solution limpide ;
b. préparation d'une microémulsion du type eau dans huile par addition d'une solution aqueuse de ligand (R-Trz) à une solution d'un tensioactif dans une huile, et dispersion jusqu'à l'obtention d'une solution limpide ;
c. mélange des deux microémulsions et traitement du mélange par ultrasons jusqu'à l'obtention d'une solution limpide ;
d. précipitation des nanoparticules par addition d'un solvant qui ne modifie pas la structure des nanoparticules, mais qui dénature l'émulsion, par exemple l'éthanol.

La dispersion est effectuée avantageusement par traitement aux ultra-sons.

Dans ce mode de réalisation également, le précipité obtenu peut être extrait du milieu aqueux par plusieurs cycles "lavage / centrifugation", puis évaporation du solvant de lavage.

Pour la préparation d'un matériau comprenant plusieurs anions Y différents, la solution aqueuse de l'étape a) comprend un précurseur de chacun des anions Y, qui peut être choisi parmi les colorants cités ci-dessus.

Pour la préparation d'un matériau comprenant plusieurs d'anions X différents, la solution aqueuse de l'étape a) comprend un sel de fer de chacun des anions X.

Les proportions de solvant, de tensioactif et d'huile requises pour obtenir une microémulsion sont déterminées à partir du diagramme de phase du mélange ternaire. Le diagramme de phase ternaire est disponible dans la littérature pour de nombreux ensembles solvant/huile/tensioactif. La détermination d'un diagramme ternaire particulier est à la portée de l'homme de métier.

Dans les deux modes de préparation des matériaux de l'invention sous forme de nanoparticules, lorsque m ≠ 0, c'est-à-dire en présence de métal M :
- lorsqu'un seul anion X est souhaité dans le matériau, on prépare une solution aqueuse de sel de M que l'on ajoute à la solution aqueuse de sel de Fe de X, avant la mise en contact avec le mélange "tensioactif+huile" ;
- lorsque plusieurs anions non colorants X différents sont souhaités dans le matériau, on prépare une solution contenant au moins un sel de Fer de l'un des anions X et au moins un sel de M d'un anion X¹ différent de X.

Pour la préparation d'un matériau selon l'invention sous forme de nanoparticules de composé à transition de spin enrobées de silice, dans les deux modes de préparation ci-dessus, on ajoute un dérivé silylé au milieu réactionnel, avant dénaturation de la micelle ou de la micro-émulsion (c'est-à-dire avant l'étape d) dans les deux modes de réalisation décrits ci-dessus). Comme exemple de dérivé silylé, on peut citer le tétraéthoxysilane, le n-octadécyl-triéthoxysilane, et le n-octyl-triéthoxysilane.

Le matériau selon la présente invention peut être sous forme de particules macroscopiques. Cette forme du matériau peut être obtenue par un procédé consistant à ajouter une solution aqueuse de sel de fer de X, et éventuellement de sel de métal M de X, contenant une quantité contrôlée d'un précurseur de l'anion colorant Y, à une solution aqueuse de ligand R-Trz, et à extraire le précipité formé. Ce mode de réalisation permet de préparer le matériau sous forme de particules macroscopiques, la couleur obtenue étant donnée directement par l'anion ou les anions colorants Y introduits dans le milieu réactionnel.

Pour la préparation d'un matériau comprenant plusieurs d'anions Y différents, la solution aqueuse de l'étape a) comprend un précurseur de chacun des anions Y. Ces précurseurs sont choisis parmi les colorant colorants cités ci-dessus.

Pour la préparation d'un matériau comprenant plusieurs anions X différents, la solution aqueuse de l'étape a) comprend un sel de fer de chacun des anions X.

Quelques modes de réalisation particuliers de préparation de matériaux répondant à la définition de l'invention, sous forme de particules macroscopiques, et permettant d'obtenir des gammes de couleur très variées, sont décrits ci-après.

Un matériau selon l'invention peut être constitué par deux composés I ayant le même ligand et des anions Y différents. Dans un mode de réalisation particulier, on prépare un matériau selon l'invention en plusieurs étapes :
- préparation d'un composé Fe₁₋ₘMₘ(R-Trz)₃X_{b}Y¹_{c1} et d'un composé Fe₁₋ₘMₘ(R-Trz)₃X_{b'}Y²_{c2} par l'un des procédés décrits ci-dessus, X représentant dans chacun de ces composés un ou plusieurs anions, Y¹ et Y² étant différents et représentant chacun un seul anion, étant entendu que les indices b, b', c1 et c2 sont choisis pour que l'électroneutralité des composés soit respectée, b et c1 étant tels que 10⁻⁵ ≤ c1 / b ≤ 0,1 (en mole) et b' et c2 étant tels que 10⁻⁵ ≤ c2 / b' ≤ 0,1 (en mole) ;
- pour chacun des composés, extraction par des cycles lavage/centrifugation ;
- mélange des deux composés obtenus à l'état solide.

Ainsi, il est possible par exemple de préparer un premier matériau présentant une couleur bleue à l'état haut spin, un deuxième matériau présentant une couleur jaune à l'état haut spin, et de mélanger les deux poudres obtenues de sorte à obtenir un matériau présentant une couleur verte à l'état haut spin.

Un matériau selon l'invention peut être constitué par un composé Fe₁₋ₘMₘ(R-Trz)₃X_{b}Y_{c} (I) et par un composé Fe₁₋mMₘ(R'-Trz)₃X'_{b}' (sans anion colorant). Dans ce mode de réalisation particulier, on prépare un matériau selon l'invention en plusieurs étapes :
- préparation d'un composé Fe₁₋ₘMₘ(R-Trz)₃X_{b}Y_{c} dans lequel Y représente un ou plusieurs anions colorants, par l'un des procédés décrits ci-dessus ;
- préparation d'un composé Fe₁₋ₘMₘ(R'-Trz)₃X'_{b'} (R et R' étant identiques ou différents, X et X' étant identiques ou différents) par un procédé tel que décrit ci-dessus, mais en omettant le précurseur de l'anion colorant Y ;
- pour chacun des composés, extraction par des cycles lavage/centrifugation ;
- mélange des deux composés obtenus à l'état solide.

Un composé du type Fe₁₋ₘMₘ(R'-Trz)₃X'_{b'} est connu pour présenter une couleur rose à l'état bas spin et une couleur blanche à l'état haut spin. Son mélange avec un composé coloré Fe₁₋ₘMₘ(R-Trz)₃X_{b}Y_{c} selon l'invention permet de modifier la couleur initiale du composé Fe₁₋ₘMₘ(R-Trz)₃X_{b}Y_{c} et d'obtenir ainsi des gammes de couleur variées.

Un matériau selon l'invention peut être constitué par un mélange de composés (I) qui diffèrent par le ligand, par X et par Y. Dans ce mode de réalisation particulier, on prépare un matériau selon l'invention en plusieurs étapes :
- préparation d'un composé Fe₁₋ₘMₘ(R-Trz)₃X_{b}Y_{c} dans lequel Y représente un ou plusieurs anions colorants, par l'un des procédés décrits ci-dessus ;
- préparation d'un composé Fe₁₋ₘMₘ(R'-Trz)₃X'_{b'}Y'_{b'} (R et R' étant différents, X et X' étant différents, Y et Y' étant différents), par un procédé tel que décrit ci-dessus;
- pour chacun des composés, extraction par des cycles lavage/centrifugation ;
- mélange des deux composés obtenus à l'état solide.

Un matériau selon la présente invention à l'état solide présente trois couleurs de commutation lorsqu'il comprend deux groupes Y différents et deux groupes Fe₁₋ₘMₘ(R-Trz) différents. Ce résultat peut être obtenu par :
- un composé Fe₁₋ₘMₘ(R-Trz)₃X_{b}Y_{c} dans lequel X représente deux anions non colorants différents et Y représente deux anions colorants différents ; ou
- un mélange de deux composés Fe_{1-m'}M'_{m'}(R'-Trz)₃X'_{b}Y'_{c} et Fe₁₋ₘMₘ(R-Trz)₃X_{b}Y_{c} dans lequels Y et Y' sont différents, et au moins l'un des couples M-M', X-X' ou R-R' est constitué de deux éléments différents.

Le matériau constitué par le mélange des deux composés sous forme de poudre est un matériau thermochrome qui présente trois couleurs de commutation. Ce type de matériau est intéressant notamment dans le domaine des indicateurs de dépassement de seuil de température. Chacun des groupes Fe₁₋ₘMₘ(R-Trz)₃X et Fe_{1-m'}M'ₘ'(R'-Trz)₃X' possède une transition avec des caractéristiques qui lui sont spécifiques (en ce qui concerne la position, le caractère abrupt, et la présence d'hystérésis). Le choix des quantités de chacun des composés dans le matériau permet de moduler l'amplitude de la transition et de la couleur intermédiaire.

Le matériau de la présente invention est particulièrement utile comme pigment thermochrome, dans le domaine des peintures et vernis, de la plasturgie, de la signalétique, de la décoration et de la sécurisation de données. A titre d'exemple, dans le domaine de la plasturgie, l'application d'un vernis est souvent réalisée sous forme de couche de quelques microns d'épaisseur. Les particules proposées peuvent être incorporées directement dans une matrice polymère qui sera appliquée sur un substrat sous forme d'une couche d'épaisseur micrométrique ou nanométrique.

Le matériau sous forme de nanoparticules selon l'invention est en outre utile pour le stockage de données. Les nanoparticules constituent une véritable "mémoire moléculaire" utilisant le phénomène de transition de spin. Un bit d'information peut être ainsi stocké dans chaque nanoparticule. La parfaite transparence d'un disque constitué d'une matrice polymérique dopée par ces nanoparticules bistables permet d'envisager des applications dans le domaine du stockage de données en volume (holographie). La présente invention présente l'avantage d'offrir une gamme de particules aux longueurs d'onde de commutation adaptables.

La modification importante de couleur (c'est-à-dire du spectre d'absorption) associée au phénomène de transition de spin se traduit par un changement de l'indice de réfraction du matériau entre l'état bas spin et l'état haut spin. Les indices de réfraction respectifs des deux états peuvent être adaptés pour rendre le milieu transparent lorsque les molécules sont dans l'état HS. A haute énergie optique, les effets photo-induits peuvent provoquer la commutation de l'état HS à l'état BS, et donc induire une variation de l'indice de réfraction. Le milieu initialement transparent devient alors opaque. Ce phénomène permet l'utilisation des nanoparticules dans le domaine des limitateurs optiques.

Il est noté que, sous l'effet d'une pression externe, l'état bas-spin de plus petit volume est favorisé. De ce fait, l'insertion de nanoparticules d'un matériau selon l'invention dans une matrice (polymère) piézo-électrique permet de commander une modification de couleur, utilisable dans le domaine des filtres optiques, et du vitrage "intelligent".

La présente invention est décrite plus en détail à l'aide des exemples qui suivent, qui sont donnés à titre d'illustration et auxquels l'invention n'est bien entendu pas limitée.

### EXEMPLE 1

### PREPARATION DE PARTICULES MACROSCOPIQUES DANS LESQUELLES Y=PATENT BLUE VF (ACID BLUE 1)

On mélange à température ambiante 5 ml d'une solution aqueuse contenant 590 mg de 4-amino-1,2,4-triazole, et 5 ml d'une solution aqueuse contenant 500 mg de FeBr₂ et 1 ml d'une solution de colorant Patent Blue VF dont la formule est donnée ci-après.

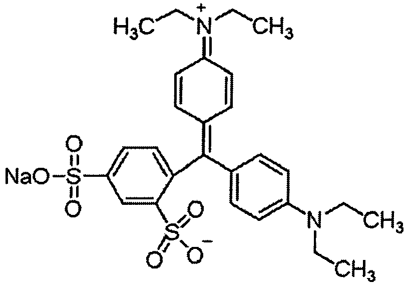

Après mélange pendant 1 heure, le milieu réactionnel est refroidi et le précipité qui s'est formé est lavé avec de l'eau.

Divers échantillons ont été préparés selon le mode opératoire ci-dessus, en utilisant des solutions de colorant ayant différentes concentrations de colorant Patent Blue VF.

Le tableau 1 présente la couleur des états bas spin et haut spin obtenus en fonction de la concentration C (en mol/L) de la solution de colorant utilisée. La couleur est indiquée notamment par les composantes trichromatiques spectrales du système CIE XYZ 1931 et de l'espace chromatique L*a*b* CIE 1976. Ce tableau montre l'évolution de la couleur à bas spin et à haut spin, lorsque la proportion d'anion colorant augmente dans le matériau.

**TABLEAU 1**

| C (mol/L) | **c/b** | Couleur état bas spin | Couleur état haut spin |
|---|---|---|---|
| 4,14.10⁻⁷ | **9,82.10⁻⁷(*)** | ROSE | BLANC |
| | | x = 0,336; y = 0,319 z = 0,346 | x = 0,333 ; y = 0,334 ; z = 0,3325 |
| | | L = 89,32 ; a = 7,70 ; b=-4,91 | L = 97,96 ; a = -0,20 ; b = 0,31 |
| 8,28.10⁻⁷ | **1,96.10⁻⁶**(*) | ROSE | BLEU PALE |
| | | x = 0,333 ; y = 0,321 ; z = 0,346 | x = 0,329 ; y = 0,332 ; z = 0,339 |
| | | L = 90,39 ; a = 5,69 ; b = -4,52 | L = 97,00 ; a = -1,35 ; b = -1,29 |
| 6,63.10⁻⁶ | **1,57.10⁻⁵** | **VIOLINE** | **BLEU** |
| | | x = 0,318 ; y = 0,316 ; z = 0,366 | x = 0,308 ; y = 0,326 ; z = 0,367 |
| | | L = 86,01 ; a = 1,00 ; b = -8,93 | L = 91,50 ; a=-8,68; b = -7,49 |
| 2,65.10⁻⁵ | **6,29.10⁻⁵** | **VIOLET** | **BLEU SOUTENU** |
| | | x = 0,329 ; y = 0,322 ; z = 0,349 | x = 0,322 ; y = 0,333 ; z = 0,345 |
| | | L = 89,79 ; a = 3,36 ; b = -5,10 | L=95,19; a=-5,10; b = -2,24 |
| 5,30.10⁻⁵ | **1,26.10⁻⁴** | **BLEU** | **BLEU CYAN** |
| | | x = 0,329 ; y = 0,322 ; z = 0,349 | x = 0,322 ; y = 0,333 ; z = 0,345 |
| | | L = 89,79 ; a = 3,36 ; b = -5,10 | L=95,19; a=-5,10; b = -2,24 |
| 2,12.10⁻⁴ | **5,03.10⁻⁴** | **BLEU FONCE** | **BLEU CYAN** |
| | | x = 0,298 ; y = 0,315 ; z = 0,387 | x = 0,288 ; y = 0,325 ; z = 0,387 |
| | | L = 82,02 ; a = -7,92 ; b=-11,85 | L = 85,82; a = -17,10 ; b = -10,47 |

| | | | |
|---|---|---|---|
| **(*)EXEMPLES NE FAISANT PAS PARTIE DE L'INVENTION** | | | |

### EXEMPLE 2

### PREPARATION DE PARTICULES MACROSCOPIQUES DANS LESQUELLES Y=TARTRAZINE (ACID YELLOW 23)

On a suivi le même mode opératoire que celui décrit dans l'exemple 1, en remplaçant le Patent Blue par de la tartrazine.

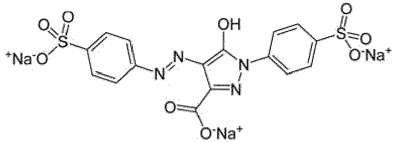

Le tableau 2 présente la couleur des états bas spin et haut spin obtenus en fonction de la concentration de la solution de colorant utilisée. La couleur est indiquée par les composantes trichromatiques spectrales du système CIE XYZ 1931 et de l'espace chromatique L*a*b* CIE 1976. Ce tableau montre l'évolution de la couleur à bas spin et à haut spin, lorsque la proportion d'anion colorant augmente dans le matériau.

**TABLEAU 2**

| C (mol/L) | **c/b** | Couleur état bas spin | Couleur état haut spin |
|---|---|---|---|
| 2,19.10⁻⁷ | **5,19.10⁻⁷**(*) | ROSE | BLANC |
| | | x = 0,336 ; y = 0,319 z = 0,346 | x = 0,333 ; y = 0,334 ; z = 0,3325 |
| | | L = 89,32 ; a = 7,70 ; b=-4,91 | L = 97,96 ; a = -0,20 ; b = 0,31 |
| 4,39.10⁻⁷ | **1,04.10⁻⁶**(*) | ROSE | JAUNE PALE |
| | | x = 0,338 ; y = 0,324 ; z = 0,338 | x = 0,341 ; y = 0,341 ; z = 0,317 |
| | | L = 89,08 ; a = 6,63 ; b = -2,55 | L = 96,82 ; a = -0,12 ; b = 4,66 |
| 1,76.10⁻⁶ | **4,18.10⁻⁶**(*) | **ROSE** | **JAUNE PAILLE** |
| | | x = 0,342 ; y = 0,325 ; z = 0,333 | x = 0,347 ; y = 0,346 ; z = 0,306 |
| | | L = 87,83 ; a = 7,87 ; b=-1,44 | L = 96,31 ; a = 0,34 ; b = 7,77 |
| 1,40.10⁻⁵ | **3,32.10⁻⁵** | **SAUMON** | **JAUNE SOUTENU** |
| | | x = 0,346 ; y = 0,327 ; z = 0,328 | x = 0,353 ; y = 0,352 ; z = 0,295 |
| | | L = 85,97 ; a = 8,43 ; b = -0,20 | L = 95,35 ; a = 0,41 ; b = 11,07 |
| 1,12.10⁻⁴ | **2,66.10⁻⁴** | **ORANGE** | **JAUNE FONCE** |
| | | x = 0,361 ; y = 0,352 ; z = 0,288 | x = 0,371 ; y = 0,368 ; z = 0,262 |
| | | L = 90,19 ; a = 3,99 ; b = 11,89 | L = 93,92 ; a = 1,36 ; b = 20,26 |

| | | | |
|---|---|---|---|
| **(*)EXEMPLES NE FAISANT PAS PARTIE DE L'INVENTION** | | | |

### EXEMPLE 3

### PREPARATION DE PARTICULES MACROSCOPIQUES DANS LESQUELLES Y¹=PATENT BLUE ET Y²=TARTRAZINE

On a suivi le même mode opératoire que celui décrit dans l'exemple 1, en utilisant en tant que colorant un mélange de Patent Blue et de Tartrazine.

Le tableau 3 présente la couleur des états bas spin et haut spin obtenus en fonction de la concentration de colorant utilisée. La couleur est indiquée par les composantes trichromatiques spectrales du système CIE XYZ 1931 et de l'espace chromatique L*a*b* CIE 1976. Dans la colonne des concentrations, a représente la concentration en tartrazine (mol/L) et b la concentration en Patent Blue (mol/L) de la solution de colorant. Ce tableau montre l'évolution de la couleur à bas spin et à haut spin, lorsque la proportion d'anion colorant augmente dans le matériau.

**TABLEAU 3**

| C (mol/L) | **c/b** | Couleur état bas spin | Couleur état haut spin |
|---|---|---|---|
| a=1,75.10⁻⁷ | **8,07.10⁻⁷**(*) | ROSE | BLANC |
| | | x = 0,336 ; y = 0,319 z = 0,346 | x = 0,333 ; y = 0,334 ; z = 0,3325 |
| b=1,65.10⁻⁷ | | L = 89,32 ; a = 7,70 ; b=-4,91 | L = 97,96 ; a = -0,20 ; b = 0,31 |
| a=7,02.10⁻⁶ | **1,8210⁻⁵** | **VIOLINE** | **VERT PALE** |
| | | x = 0,341 ; y = 0,329 ; z = 0,331 | x = 0,342 ; y = 0,349 ; z = 0,309 |
| b=6.62.10⁻⁷ | | L = 87,00 ; a = 5,20 ; b = -0,34 | L = 93,99 ; a = -3,29 ; b = 7,69 |
| a=2,81.10⁻⁶ | **1,29.10⁻⁵** | **GRIS VERT** | **VERT** |
| | | x = 0,336 ; y = 0,327 ; z = 0,336 | x = 0,336 ; y = 0,343 ; z = 0,320 |
| b=2.65.10⁻⁶ | | L = 90,21 ; a = 4,17 ; b=-1,67 | L = 95,89 ; a = -3,25 ; b = 4,48 |
| a=1,12.10⁻⁵ | **5,17.10⁻⁵** | **VERT FONCE** | **VERT** |
| | | x = 0,332 ; y = 0,375 ; z = 0,293 | x = 0,332 ; y = 0,388 ; z = 0,280 |
| b=1,06.10⁻⁵ | | L = 72,13 ; a = -15,36 ; b = 12,03 | L = 71,74 ; a = -19,06 ; b = 15,64 |

| | | | |
|---|---|---|---|
| **(*)EXEMPLE NE FAISANT PAS PARTIE DE L'INVENTION** | | | |

Les exemples décrits ci-dessus confirment que les matériaux à transition de spin du type complexe de fer dont les anions ne sont pas colorants sont tous roses à l'état bas spin et blancs à l'état haut spin. Ces couleurs sont modifiées lorsque les anions non colorants sont partiellement remplacés par des anions colorants, lorsque la teneur en anion colorant dépasse un certain seuil. Lorsque la proportion d'anion colorant est élevée, la couleur dominante est la couleur intrinsèque du colorant dont provient l'anion. Les proportions intermédiaires permettent de faire varier la couleur à l'état bas spin et la couleur à l'état haut spin.

Les matériaux de l'invention fournissent ainsi des composés à transition de spin qui varient entre des couleurs très variées, qui peuvent être ajustées en modifiant les proportions relatives d'anion colorant et d'anion non colorant. La température de la transition, le caractère plus ou moins abrupt et l'hystérésis sont régies par l'ensemble formé par le ligand et l'anion non colorant. La présente invention offre donc un large choix de matériaux à transition de spin, en termes de température de transition, de couleurs et de taille de particules.

## Revendications

1. Matériau constitué par au moins un composé à transition de spin répondant à la formule
Fe₁₋ₘMₘ(R-Trz)₃X_{b}Y_{c} (I)
dans laquelle :
- M est un métal ayant une configuration 3d⁴, 3d⁵, 3d⁶ ou 3d⁷, autre que Fe ;
- 0≤m<1 ;
- lorsque m>0, M est choisi parmi Zinc(II), Manganèse(II), Nickel(II), et Cobalt(II) ;
- R-Trz représente un ligand 1,2,4-triazole portant un substituant R sur l'azote en position 4 ;
- R est un groupe alkyle ayant de 1 à 4 atomes de carbone, ou un groupe R¹R²N- dans lequel R¹ et R² représentent chacun indépendamment de l'autre H ou un radical alkyle ayant de 1 à 4 atomes de carbone ;
- X représente au moins un anion monovalent ou divalent non colorant ;
- Y représente au moins un anion qui a un groupe colorant ayant au moins deux cycles aromatiques et au moins un groupe SO₃⁻ ;
- b>0, c>0, b et c étant choisis de telle sorte que l'électroneutralité du composé (I) soit respectée ; b et c étant tels que 10⁻⁵ ≤ c / b ≤ 0,1 (en mole).

2. Matériau selon la revendication 1, **caractérisé en ce qu'**il est constitué par
- un seul composé (I) dans lequel Y représente un anion colorant ou plusieurs anions colorants différents ;
- plusieurs composés différents qui répondent chacun à la formule (I) ; ou
- un composé répondant à la formule I et un composé Fe₁₋ₘMₘ(R-Trz)₃X_{b}, sans anion colorant.

3. Matériau selon la revendication 1 ou 2, **caractérisé en ce que** X représente un ou plusieurs anions choisis dans le groupe constitué par BF₄⁻, PF₆⁻ ClO₄⁻, Br⁻, Cl⁻, NO₃⁻, CF₃SO₃⁻, CH₃SO₃⁻, SO₄²⁻ et CO₃²⁻.

4. Matériau selon la revendication 1, **caractérisé en ce que** le composé (I) répond à la formule Fe(R-Trz)₃(X)_{b}(Y)_{c}.

5. Matériau l'une des revendications 1 à 4, **caractérisé en ce qu'**il est sous forme de particules nanométriques, ayant une dimension inférieure à 500 nm.

6. Matériau l'une des revendications 1 à 4, **caractérisé en ce qu'**il est sous forme de particules macroscopiques ayant un diamètre moyen supérieur à 500 nm et inférieur à 500 µm.

7. Matériau selon la revendication 5, **caractérisé en ce que** les particules nanométriques sont enrobées par un film de silice.

8. Matériau selon l'une des revendications 1 à 7, **caractérisé en ce qu'**il est sous forme d'une suspension dans un milieu aqueux.

9. Matériau selon l'une des revendications 1 à 7, **caractérisé en ce qu'**il est sous forme de poudre.

10. Matériau selon la revendication 9, présentant trois couleurs de commutation, **caractérisé en ce qu'**il est constitué par :
- un composé Fe₁₋ₘMₘ(R-Trz)₃X_{b}Y_{c} dans lequel X représente deux anions non colorants différents et Y représente deux anions colorants différents ; ou
- un mélange de deux composés Fe_{1-m'}M'_{m'}(R'-Trz)₃X'_{b}Y'_{c} et Fe₁₋ₘMₘ(R-Trz)₃X_{b}Y_{c} dans lequels Y et Y' sont différents, et au moins l'un des couples M-M', X-X' ou R-R' est constitué de deux éléments différents.

11. Procédé de préparation d'un matériau selon la revendication 1, **caractérisé en ce qu'**il consiste à mettre en contact une solution contenant au moins un sel de Fe(II) d'un anion X, éventuellement un sel du métal M et d'un anion X identique ou différent de l'anion X du sel de fer, et un précurseur du (des) anion(s) colorant(s), avec une solution de ligand R-Trz, les divers réactifs étant introduits dans le milieu réactionnel en quantités stoechiométriques correspondant à la formule Fe₁₋ₘMₘ(R-Trz) ₃X_{b}Y_{c} telle que définie à la revendication 1, puis à faire précipiter le produit obtenu par abaissement de la température.

12. Procédé selon la revendication 11, **caractérisé en ce qu'**il comprend une étape comprenant plusieurs cycles lavage/centrifugation, suivis d'un séchage, pour obtenir une poudre.

13. Procédé selon la revendication 11, mis en oeuvre pour la préparation de nanoparticules d'un matériau Fe₁₋ₘMₘ(R-Trz)₃X_{b}Y_{c}, **caractérisé en ce qu'**il consiste en une synthèse par micelles inverses, qui comprend les étapes suivantes :
a) préparation d'une émulsion du type eau dans huile par addition sous agitation énergique d'une composition de type huile à propriétés tensioactives à une solution aqueuse contenant au moins un sel de fer d'un anion non colorant X, de l'acide ascorbique, au moins un précurseur d'anion Y, et éventuellement un sel d'un métal M et d'un anion non colorant X¹ identique ou différent de X ;
b) préparation d'une émulsion du type eau dans huile par addition d'une composition de type huile à propriétés tensioactives à une solution aqueuse du ligand R-Trz sous agitation énergique ;
c) mélange des deux émulsions sous agitation énergique ;
d) précipitation des nanoparticules par addition d'un solvant qui ne modifie pas la structure des nanoparticules, et qui dénature l'émulsion ;
e) éventuellement extraction du précipité formé.

14. Procédé selon la revendication 11, mis en oeuvre pour la préparation de nanoparticules d'un matériau Fe₁₋ₘMₘ(R-Trz)₃X_{b}Y_{c}, **caractérisé en ce qu'**il consiste en une synthèse en microémulsion qui comprend les étapes suivantes :
a) préparation d'une microémulsion du type eau dans huile par addition d'une solution aqueuse contenant au moins un sel de fer d'au moins un anion X et d'au moins un précurseur d'anion colorant Y, à une solution d'un tensioactif dans une huile (n-heptane par exemple), et dispersion jusqu'à l'obtention d'une solution limpide ;
b) préparation d'une microémulsion du type eau dans huile par addition d'une solution aqueuse de ligand (R-Trz) à une solution d'un tensioactif dans une huile, et dispersion jusqu'à l'obtention d'une solution limpide ;
c) mélange des deux microémulsions et dispersion du mélange jusqu'à l'obtention d'une solution limpide ;
d) précipitation des nanoparticules par addition d'un solvant qui ne modifie pas la structure des nanoparticules, mais qui dénature l'émulsion ;
e) éventuellement, extraction du précipité formé.

15. Procédé selon la revendication 14, **caractérisé en ce que** la dispersion est effectuée par traitement aux ultrasons, dans les étapes b) et c).

16. Procédé selon l'une des revendications 13 ou 14, pour la préparation d'un matériau sous forme de nanoparticules de composé à transition de spin enrobées de silice, **caractérisé en ce qu'**on ajoute un dérivé silylé au milieu réactionnel, avant l'étape d).

17. Procédé selon la revendication 11, mis en oeuvre pour la préparation de particules macroscopiques d'un matériau Fe₁₋ₘMₘ(R-Trz)₃X_{b}Y_{c}, **caractérisé en ce qu'**il consiste à ajouter une solution aqueuse de sel de fer d'un anion non colorant X¹, et éventuellement de sel de métal M d'un anion non colorant X² identique à X¹ ou différent, contenant une quantité contrôlée d'au moins un précurseur d'au moins un anion colorant Y, à une solution aqueuse de ligand R-Trz, et à extraire le précipité formé.

18. Procédé selon la revendication 11, **caractérisé en ce qu'**il comprend les étapes suivantes :
- préparation d'un composé Fe₁₋ₘMₘ(R-Trz)₃X_{b}Y¹_{c1} et d'un composé Fe₁₋ₘMₘ(R-Trz)₃X_{b'}Y²_{c2}, X représentant dans chacun de ces composés un ou plusieurs anions non colorants, Y¹ et Y² étant différents et représentant chacun un seul anion, étant entendu que les indices b, b', c1 et c2 sont choisis pour que l'électroneutralité des composés soit respectée, b et c1 étant tels que 10⁻⁵ ≤ c1 / b ≤ 0,1 (en mole) et b' et c2 étant tels que 10⁻⁵ ≤ c2 / b' ≤ 0,1 (en mole);
- pour chacun des composés, extraction par des cycles lavage/centrifugation
- mélange des deux composés obtenus à l'état solide.

19. Procédé selon la revendication 11, **caractérisé en ce qu'**il comprend les étapes suivantes :
- préparation d'un composé Fe₁₋ₘMₘ(R-Trz)₃X_{b}Y_{c} dans lequel Y représente un ou plusieurs anions colorants ;
- préparation d'un composé Fe₁₋ₘMₘ(R'-Trz)₃X'_{b'} (R et R' étant identiques ou différents, X et X' étant identiques ou différents), en omettant le précurseur de l'anion colorant Y ;
- pour chacun des composés, extraction par des cycles lavage/centrifugation ;
- mélange des deux composés obtenus à l'état solide.

20. Procédé selon la revendication 11, **caractérisé en ce qu'**il comprend les étapes suivantes :
- préparation d'un composé Fe₁₋ₘMₘ(R-Trz)₃X_{b}Y_{c} dans lequel Y représente un ou plusieurs anions colorants, par l'un des procédés décrits ci-dessus ;
- préparation d'un composé Fe₁₋ₘMₘ(R'-Trz)₃X'_{b'}Y'_{b'} (R et R' étant différents, X et X' étant différents, Y et Y' étant différents), par un procédé tel que décrit ci-dessus;
- pour chacun des composés, extraction par des cycles lavage/centrifugation
- mélange des deux composés obtenus à l'état solide.

21. Utilisation d'un matériau selon la revendication 1 comme pigment thermochrome, comme support pour le stockage de données ou comme limitateur optique.

## Patentansprüche

1. Material, das von mindestens einer Spinübergangsverbindung gebildet wird, die der Formel
Fe₁₋ₘMₘ(R-Trz)₃X_{b}Y_{c} (I)
entspricht, wobei:
- M ein Metall mit einer Konfiguration 3d⁴, 3d⁵, 3d⁶ oder 3d⁷ ist, anders als Fe,
- 0<m<1,
- wenn m>0, ist M aus Zink(II), Mangan(II), Nickel(II) und Kobalt(II) ausgewählt,
- R-Trz einen 1,2,4-Triazolliganden mit einem Substituenten R auf dem Stickstoff an Position 4 darstellt,
- R eine Alkylgruppe mit 1 bis 4 Kohlenstoffatomen oder eine Gruppe R¹R²N-, wobei R¹ und R² jeweils unabhängig voneinander H oder ein Alkylradikal mit 1 bis 4 Kohlenstoffatomen darstellen, ist,
- X mindestens ein einwertiges oder zweiwertiges nicht färbendes Anion darstellt,
- Y mindestens ein Anion darstellt, das eine färbende Gruppe mit mindestens zwei aromatischen Zyklen und mindestens einer Gruppe SO₃⁻ hat,
- b>0, c>0, wobei b und c derart ausgewählt sind, dass die Elektroneutralität der Verbindung (I) respektiert ist, wobei b und c derart sind, dass 10⁻⁵ ≤ c / b ≤ 0,1 (in Mol).

2. Material nach Anspruch 1, **dadurch gekennzeichnet, dass** es gebildet wird von:
- einer einzigen Verbindung (I), wobei Y ein färbendes Anion oder mehrere unterschiedliche färbende Anionen darstellt,
- mehreren unterschiedlichen Verbindungen, die jeweils der Formel (I) entsprechen, oder
- einer Verbindung, die der Formel I entspricht und einer Verbindung Fe₁₋ₘMₘ(R-Trz)₃X_{b} ohne färbendes Anion.

3. Material nach Anspruch 1 oder 2, **dadurch gekennzeichnet, dass** X ein oder mehrere Anionen darstellt, die aus der Gruppe ausgewählt sind, die von BF₄⁻, PF₆⁻ ClO₄⁻, Br⁻, Cl⁻, NO₃⁻, CF₃SO₃⁻, CH₃SO₃⁻, SO₄²⁻ und CO₃²⁻ gebildet wird.

4. Material nach Anspruch 1, **dadurch gekennzeichnet, dass** die Verbindung (I) der Formel Fe(R-Trz)₃(X)_{b}(Y)_{c} entspricht.

5. Material nach einem der Ansprüche 1 bis 4, **dadurch gekennzeichnet, dass** es in Form von Nanometerpartikeln ist, die eine Größe unter 500 nm haben.

6. Material nach einem der Ansprüche 1 bis 4, **dadurch gekennzeichnet, dass** es in Form von makroskopischen Partikeln ist, die einen mittleren Durchmesser über 500 nm und unter 500 µm haben.

7. Material nach Anspruch 5, **dadurch gekennzeichnet, dass** die Nanometerpartikel von einem Siliziumdioxidfilm umhüllt sind.

8. Material nach einem der Ansprüche 1 bis 7, **dadurch gekennzeichnet, dass** es in Form eine Suspension in einem wässrigen Medium vorliegt.

9. Material nach einem der Ansprüche 1 bis 7, **dadurch gekennzeichnet, dass** es in Pulverform vorliegt.

10. Material nach Anspruch 9, das drei Kommutationsfarben aufweist, **dadurch gekennzeichnet, dass** es gebildet wird von:
- einer Verbindung Fe₁₋ₘMₘ(R-Trz)₃X_{b}Y_{c}, wobei X zwei unterschiedliche nicht färbende Anionen darstellt und Y zwei unterschiedliche färbende Anionen darstellt, oder
- einem Gemisch aus zwei Verbindungen Fe_{1-m'}M_{m'}(R'-Trz)₃X'_{b}Y'_{c} und Fe₁₋ₘMₘ(R-Trz)₃X_{b}Y_{c}, wobei Y und Y' unterschiedlich sind, und mindestens eines der Paare M-M', X-X' oder R-R' von zwei unterschiedlichen Elementen gebildet wird.

11. Herstellungsverfahren eines Materials nach Anspruch 1, **dadurch gekennzeichnet, dass** es darin besteht, eine Lösung, die mindestens ein Fe(II)-Salz eines Anions X, eventuell ein Salz des Metalls M und eines Anions X, das mit dem Anion X des Eisensalzes identisch oder unterschiedlich ist, und einen Vorläufer des/der färbenden Anions/Anionen enthält, mit einer Ligandenlösung R-Trz in Kontakt zu versetzen, wobei die verschiedenen Reagenzien in stoechiometrischen Mengen der Formel Fe₁₋ₘMₘ(R-Trz)₃X_{b}Y_{c} nach Anspruch 1 entsprechend in das Redaktionsmedium eingeführt werden, und dann das erhaltene Produkt durch Absenken der Temperatur auszufällen.

12. Verfahren nach Anspruch 11, **dadurch gekennzeichnet, dass** es einen Schritt umfasst, der mehrere Wasch-/Zentrifugationszyklen, gefolgt von einer Trocknung, umfasst, um ein Pulver zu erhalten.

13. Verfahren nach Anspruch 11, umgesetzt für die Herstellung von Nanopartikeln eines Materials Fe₁₋ₘMₘ(R-Trz)₃X_{b}Y_{c}, **dadurch gekennzeichnet, dass** es aus einer Synthese durch inverse Mizellen besteht, die die folgenden Schritte umfasst:
a) Herstellen einer Emulsion vom Typ Wasser in Öl durch Hinzufügen unter kräftigem Rühren einer Zusammensetzung vom Typ Öl mit Tensideigenschaften zu einer wässrigen Lösung, die mindestens ein Eisensalz eines nicht färbenden Anions X, Ascorbinsäure, mindestens einen Anionenvorläufer Y und eventuell ein Salz eines Metalls M und eines nicht färbenden Anions X¹, das mit X identisch oder unterschiedlich ist, enthält,
b) Herstellen einer Emulsion vom Typ Wasser in Öl durch Hinzufügen einer Zusammensetzung vom Typ Öl mit Tensideigenschaften zu einer wässrigen Lösung des Liganden R-Trz unter kräftigem Rühren,
c) Mischen der zwei Emulsionen unter kräftigem Rühren,
d) Ausfällen der Nanopartikel durch Hinzufügen eines Lösungsmittels, das die Struktur der Nanopartikel nicht verändert und die Emulsion denaturiert,
e) eventuell Extrahieren des gebildeten Präzipitats.

14. Verfahren nach Anspruch 11, umgesetzt für die Herstellung von Nanopartikeln eines Materials Fe₁₋ₘMₘ(R-Trz)₃X_{b}Y_{c}, **dadurch gekennzeichnet, dass** es aus einer Synthese in Mikroemulsion besteht, die die folgenden Schritte umfasst:
a) Herstellen einer Mikroemulsion vom Typ Wasser in Öl durch Hinzufügen einer wässrigen Lösung, die mindestens ein Eisensalz mindestens eines Anions X und mindestens eines Vorläufers eines färbenden Anionens Y zu einer Lösung eines Tensids in einem Öl (n-Heptan beispielsweise) enthält, und Dispersion bis zum Erhalt einer klaren Lösung,
b) Herstellen einer Mikroemulsion vom Typ Wasser in Öl durch Hinzufügen einer wässrigen Ligandenlösung (R-Trz) zu einer Lösung eines Tensids in einem Öl, und Dispersion bis zum Erhalt einer klaren Lösung,
c) Mischen der zwei Mikroemulsionen und Dispersion des Gemischs bis zum Erhalt einer klaren Lösung,
d) Ausfällen der Nanopartikel durch Hinzufügen eines Lösungsmittels, das die Struktur der Nanopartikel nicht verändert, aber die Emulsion denaturiert,
e) eventuell Extrahieren des gebildeten Präzipitats.

15. Verfahren nach Anspruch 14, **dadurch gekennzeichnet, dass** die Dispersion durch Ultraschallbehandlung in den Schritten b) und c) durchgeführt wird.

16. Verfahren nach einem der Ansprüche 13 oder 14 für die Herstellung eines Materials in Form von mit Siliziumdioxid umhüllten Nanopartikeln aus Spinübergangsverbindung, **dadurch gekennzeichnet, dass** dem Reaktionsmedium vor dem Schritt d) ein silyliertes Derivat hinzugefügt wird.

17. Verfahren nach Anspruch 11, umgesetzt für die Herstellung von makroskopischen Partikeln eines Materials Fe₁₋ₘMₘ(R-Trz)₃X_{b}Y_{c}, **dadurch gekennzeichnet, dass** es darin besteht, eine wässrige Eisensalzlösung eines nicht färbenden Anions X¹ und eventuell eine Metallsalzlösung M eines nicht färbenden Anions X², das mit X¹ identisch oder unterschiedlich ist, die eine kontrollierte Menge mindestens eines Vorläufers mindestens eines färbenden Anions Y enthält, einer wässrigen Ligandenlösung R-Trz hinzuzufügen und das gebildete Präzipitat auszufällen.

18. Verfahren nach Anspruch 11, **dadurch gekennzeichnet, dass** es die folgenden Schritte umfasst:
- Herstellen einer Verbindung Fe₁₋ₘMₘ(R-Trz)₃X_{b}Y¹_{c1} und einer Verbindung Fe₁₋ₘMₘ(R-Trz)₃X_{b'}Y²_{c2}, wobei X in jeder dieser Verbindungen ein oder mehrere nicht färbende Anionen darstellt, wobei Y¹ und Y² unterschiedlich sind und jeweils ein einziges Anion darstellen, wobei es sich versteht, dass die Indexe b, b', c1 und c2 ausgewählt sind, damit die Elektroneutralität der Verbindungen respektiert ist, wobei b und c1 derart sind, dass 10⁻⁵ ≤ c1 / b ≤ 0,1 (in Mol) und b' und c2 derart sind, dass 10⁻⁵ ≤ c2 / b'≤ 0,1 (in Mol),
- für jede der Verbindungen Extraktion durch Wasch-/Zentrifugationszyklen,
- Mischen der zwei erhaltenen Verbindungen im festen Zustand.

19. Verfahren nach Anspruch 11, **dadurch gekennzeichnet, dass** es die folgenden Schritte umfasst:
- Herstellen einer Verbindung Fe₁₋ₘMₘ(R-Trz)₃X_{b}Y_{c}, wobei Y ein oder mehrere färbende Anionen darstellt,
- Herstellen einer Verbindung Fe₁₋ₘMₘ(R'-Trz)₃X'_{b'} (wobei R und R' identisch oder unterschiedlich sind, wobei X und X' identisch oder unterschiedlich sind), bei Auslassung des Vorläufers des färbenden Anions Y,
- für jede der Verbindungen Extraktion durch Wasch-/Zentrifugationszyklen,
- Mischen der zwei erhaltenen Verbindungen im festen Zustand.

20. Verfahren nach Anspruch 11, **dadurch gekennzeichnet, dass** es die folgenden Schritte umfasst:
- Herstellen einer Verbindung Fe₁₋ₘMₘ(R-Trz)₃X_{b}Y_{c}, wobei Y ein oder mehrere färbende Anionen darstellt, mit einem der oben beschriebenen Verfahren,
- Herstellen einer Verbindung Fe₁₋ₘMₘ(R'-Trz)₃X'_{b'}Y'_{b'}, (wobei R und R' unterschiedlich sind, wobei X und X' unterschiedlich sind, wobei Y und Y' unterschiedlich sind) mit einem wie oben beschriebenen Verfahren,
- für jede der Verbindungen Extraktion durch Wasch-/Zentrifugationszyklen,
- Mischen der zwei erhaltenen Verbindungen im festen Zustand.

21. Verwendung eines Materials nach Anspruch 1 als thermochromes Pigment als Träger für die Datenspeicherung oder als optischer Begrenzer.

## Claims

1. A material formed of at least one spin transition compound meeting formula:
Fe₁₋ₘM(R-Trz)₃X_{b}Y_{c} (I)
where:
- M is a metal having a 3d⁴, 3d⁵, 3d⁶ or 3d⁷ configuration, other than Fe;
- 0≤m<1;
- when m>0, M is selected from among Zinc(II), Manganese(II), Nickel(II) and Cobalt(II);
- R-Trz is a 1,2,4-triazole ligand carrying an R substituent on nitrogen at position 4;
- R is an alkyl group having 1 to 4 carbon atoms, or an R¹R²N⁻ group where R¹ and R² are each independently H or an alkyl radical having 1 to 4 carbon atoms;
- X is at least one non-colouring monovalent or divalent anion;
- Y is at least an anion which has a colouring group having at least two aromatic rings and at least one SO₃⁻ group;
- b>0, c>0, b and c being selected such that the electroneutrality of compound (I) is heeded; b and c being such that 10⁻⁵ ≤ c / b ≤ 0.1 (in moles).

2. The material according to claim 1 **characterized in that** it is formed of:
- a single compound (I) where Y is a colouring anion or several different colouring anions;
- several different compounds which each meet formula (I); or
- a compound meeting formula I and a Fe₁₋ₘMₘ(R-Trz)₃X_{b} compound without colouring anion.

3. The material according to claim 1 or 2, **characterized in that** X is one or more anions selected from the group formed by BF₄⁻, PF₆⁻, ClO₄⁻, Br⁻, Cl⁻, NO₃⁻, CF₃SO₃⁻, CH₃SO₃⁻, SO₄²⁻ and CO₃²⁻.

4. The material according to claim 1, **characterized in that** compound (I) meets the formula Fe(R-Trz)₃(X)_{b}(Y)_{c}.

5. The material according to one of claims 1 to 4 **characterized in that** it is in the form of nanometric particles having a size of less than 500 nm.

6. The material according to one of claims 1 to 4, **characterized in that** it is in the form of macroscopic particles having a mean diameter greater than 500 nm and smaller than 500 µm.

7. The material according to claim 5, **characterized in that** the nanometric particles are coated with a silica film.

8. The material according to one of claims 1 to 7, **characterized in that** it is in the form of a suspension in an aqueous medium

9. The material according to one of claims 1 to 7, **characterized in that** it is in powder form.

10. The material according to claim 9, having three switching colours, **characterized in that** it is composed of:
- a compound Fe₁₋ₘMₘ(R-Trz)₃X_{b}X_{c} where X represents two different non-colouring anions and Y represents two different colouring anions; or
- a mixture of two compounds Fe_{1-m'}M'_{m'}(R'-Trz)₃X'_{b}Y'_{c} and Fe₁₋ₘMₘ(R-Trz)₃X_{b}Y_{c} where Y and Y' are different, and at least one of the pairs M-M', X-X' or R-R' is formed of two different elements.

11. A method for preparing a material according to claim 1, **characterized in that** it consists of placing a solution containing at least one Fe(II) salt of an anion X, optionally a salt of metal M and of an anion X the same or differing from the iron salt anion X, and a precursor of the colouring anion(s), in contact with a solution of R-Trz ligand, the various reagents being added to the reaction medium in stoichiometric amounts corresponding to formula Fe₁₋ₘMₘ(R-Trz)₃X_{b}Y_{c} such as defined in claim 1, then causing the product obtained to be precipitated by lowering the temperature.

12. The method according to claim 11, **characterized in that** it comprises a step comprising several wash/centrifuging cycles followed by drying to obtain a powder.

13. The method according to claim 11 used to prepare nanoparticles of Fe₁₋ₘMₘ(R-Trz)₃X_{b}Y_{c} material, **characterized in that** it consists of reverse micelle synthesis which comprises the following steps:
a) preparing an emulsion of water-in-oil type by adding under vigorous agitation an oil-type composition having surfactant properties to an aqueous solution containing at least one iron salt of a non-colouring anion X, ascorbic acid, at least one precursor of anion Y, and optionally a salt of a metal M and of a non-colouring anion X¹ the same or differing from X;
b) preparing an emulsion of water-in-oil type by adding an oil-type composition having surfactant properties to an aqueous solution of the R-Trz ligand under vigorous agitation;
c) mixing the two emulsions under vigorous agitation;
d) precipitating the nanoparticles by adding a solvent which does not modify the structure of the nanoparticles, and which denatures the emulsion;
e) optionally extracting the precipitate formed.

14. The method according to claim 11 used to prepare nanoparticles of Fe₁₋ₘMₘ(R-Trz)₃X_{b}Y_{c} material, **characterized in that** it consists of microemulsion synthesis which comprises the following steps:
a) preparing a microemulsion of water-in-oil type by adding an aqueous solution containing at least one iron salt of at least one anion X and at least one precursor of a colouring anion Y, to a solution of a surfactant in oil (for example n-heptane) followed by dispersion until a clear solution is obtained;
b) preparing a microemulsion of water-in-oil type by adding an aqueous solution of ligand (R-Trz) to a solution of a surfactant in oil, followed by dispersion until a clear solution is obtained;
c) mixing the two microemulsions and dispersing the mixture until a clear solution is obtained;
d) precipitating the nanoparticles by adding a solvent which does not modify the structure of the nanoparticles, but which denatures the emulsion;
e) optionally extracting the precipitate formed.

15. The method according to claim 14, **characterized in that** dispersion is performed by ultrasound treatment at steps b) and c).

16. The method according to one of claims 13 or 14 to prepare a material in the form of silica-coated nanoparticles of a spin transition compound, **characterized in that** a silylated derivative is added to the reaction medium before step d).

17. The method according to claim 11 used to prepare macroscopic particles of Fe₁₋ₘMₘ(R-Trz) ₃X_{b}Y_{c} material, **characterized in that** it consists of adding an aqueous solution of an iron salt of a non-colouring anion X¹, and optionally a metal salt M of a non-colouring anion X² the same or differing from X¹, and containing a controlled amount of at least one precursor of at least one colouring anion Y, to an aqueous solution of R-Trz ligand and extracting the precipitate formed.

18. The method according to claim 11, **characterized in that** it comprises the following steps:
- preparing a compound Fe₁₋ₘMₘ(R-Trz)₃X_{b}Y¹_{c1} and a compound Fe₁₋ₘMₘ(R-Trz)₃X_{b'}Y²_{c2}, X in each of these compounds representing one or more non-colouring anions, Y¹ and Y² being different and each representing a single anion, on the understanding that the subscripts b, b', c1 and c2 are selected so that the electroneutrality of the compounds is heeded, b and c1 being such that 10⁻⁵ ≤ c1 / b ≤ 0.1 (in moles) and b' and c2 being such that 10⁻⁵ ≤ c2 / b' ≤ 0.1 (in moles);
- for each of the compounds, extraction with wash/centrifuging cycles;
- mixing the two compounds obtained in the solid state.

19. The method according to claim 11, **characterized in that** it comprises the following steps:
- preparing a compound Fe₁₋ₘMₘ(R-Trz)₃X_{b}Y_{c} where Y represents one or more colouring anions;
- preparing a compound Fe₁₋ₘMₘ(R'-Trz)₃X'_{b'} (R and R' being the same or different, X and X' being the same or different) omitting the precursor of the colouring anion Y;
- for each of the compounds, extraction with wash/centrifuging cycles;
- mixing the two compounds obtained in the solid state.

20. The method according to claim 11, **characterized in that** it comprises the following steps:
- preparing a compound Fe₁₋ₘMₘ(R-Trz)₃X_{b}Y_{c} where Y represents one or more colouring anions, using one of the above-described methods;
- preparing a compound Fe₁₋ₘMₘ(R'-Trz)₃X'_{b'}Y'_{b'} (R and R' being different, X and X' being different, Y and Y' being different) using a method such as described above;
- for each of the compounds extracting with wash/centrifuging cycles;
- mixing the two compounds obtained in the solid state.

21. The use of a material according to claim 1 as thermochromic pigment, as medium for data storage or as optical limiter.
